## Europäisches Patentamt
## European Patent Office
## Office européen des brevets

(19)

(11) Veröffentlichungsnummer : **0 018 591**
**B1**

(12) **EUROPÄISCHE PATENTSCHRIFT**

(45) Veröffentlichungstag der Patentschrift :
**15.12.82**

(51) Int. Cl.³ : **C 08 L 25/12** // (C08L25/12, 71/02)

(21) Anmeldenummer : **80102188.2**

(22) Anmeldetag : **23.04.80**

(54) **Formmassen, enthaltend Styrolacrylnitril-Copolymerisate und Äthylenoxid-/Propylenoxid-Dreiblockcopolymerisate, Verwendung derselben und Formteile aus diesen.**

(30) Priorität : 25.04.79 DE 2916668

(43) Veröffentlichungstag der Anmeldung :
**12.11.80 (Patentblatt 80/23)**

(45) Bekanntmachung des Hinweises auf die Patenterteilung : 15.12.82 Patentblatt 82/50

(84) Benannte Vertragsstaaten :
**AT BE DE FR GB IT NL SE**

(56) Entgegenhaltungen :
EP A 0 000 704
DE A 2 333 377
US A 3 317 452

Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Hambrecht, Juergen, Dr.
An der Stelge 12
D-6903 Neckargemuend-Dilsberg (DE)
Erfinder : Lindenschmidt, Gerhard, Dr.
Bucheweg 11
D-6906 Leimen (DE)
Erfinder : Regel, Walter
Hillensheimer Strasse 27
D-6704 Mutterstadt (DE)

EP 0 018 591 B1

Jouve, 18, rue St-Denis, 75001 Paris, France

Formmassen, enthaltend Styrolacrylnitril-Copolymerisate und Äthylenoxid-/Propylenoxid-Drei-
blockcopolymerisate, Verwendung derselben und Formteile aus diesen

Die Erfindung betrifft Styrol-Acrylnitrilcopolymerisate enthaltende Formmassen, die 0,1 bis 2,0 Gew.-%, bezogen auf das Copolymerisat eines Dreiblockcopolymeren X-Y-X mit einem mittelständigen Propylenoxidblock und mit zwei endständigen Äthylenoxidblöcken X, aufweisen. Die Dreiblockcopolymere müssen sowohl bezüglich der Verteilung der beiden Blockarten X und Y bezüglich des Zahlenmittels des Molekulargewichtes bestimmte Bedingungen erfüllen.

Zum Stand der Technik nennen wir :

(1) FR-PS 1 239 902
(2) DE-AS 1 297 341
(3) DE-AS 1 244 398

Aus (1) ist die Verwendung von Äthylenoxid-/Propylenoxid-Dreiblockcopolymeren für die antistatische Ausrüstung von Polymeren in Mengen von 3 bis 12 Gew.-%, bezogen auf die Polymeren, bekannt. Die bekannten Antistatika sollen (vgl. FR-PS, Resumée 2) für Polymethylmethacrylat, PVC, Polyäthylen, Polystyrol bzw. ABS-Formmassen angewendet werden.

Aus (2) ist die antistatische Ausrüstung von Polymeren, mit Äthylenoxid-/Propylenoxid-Copolymeren, die einen statistischen oder einen Blockaufbau aufweisen können, bekannt. Ausweislich der Beispiele werden nur Polyäthylenglykole oder deren Derivate, meist im Gemisch, im Molekulargewichtsbereich von 600 bis 12 000 für die antistatische Ausrüstung von Polyäthylen angewendet.

In (3) sind antistatisch ausgerüstete thermoplastische Formmassen beschrieben, die 1 bis 10 Gew.-% eines Polypropylenglykols mit einem mittleren Molekulargewicht zwischen 2 000 und 5 000 enthalten können. Ausweislich der Beispiele wurden Polypropylenglykole überwiegend in Mengen von 4 bis 6 Gew.-%, bezogen auf die Formmasse, angewendet.

Aufgabe der vorliegenden Erfindung war es, Styrol-Acrylnitrilcopolymerisate mit guten Verarbeitungseigenschaften beim Spritzguß zur Verfügung zu stellen. Styrol-Acrylnitril-Copolymerisate lassen sich mit steigendem Molekulargewicht schwerer verarbeiten. Dies gilt insbesondere für den Spritzguß. Zu bemängeln sind eine enge Verarbeitungsbreite und eine schlechte Entformung. Die Verarbeitungsbreite bezeichnen wir als eng, wenn zur Herstellung fehlerfreier Formteile der Spritzdruck nur in einem schmalen Bereich variiert werden kann. Charakteristische Verarbeitungsfehler die sowohl auf die enge Verarbeitungsbreite und die daraus resultierende Formüber- oder -unterfüllung als auch auf die mangelhafte Entfernung zurückzuführen sind, sind Schieferflecken, Schieferbrüche sowie Anguß-, Ecken- und Bodenreißer.

Es bestand daher die Aufgabe, mit Styrol-Acrylnitrilcopolymerisaten verträgliche Hilfsstoffe zu suchen, die das Verarbeitungsverhalten der SAN-Copolymerisate verbessern, d.h. insbesondere deren Verarbeitungsbreite, ohne den Nachteil aufzuweisen, daß durch den Zusatz dieser Hilfsstoffe die mechanischen Eigenschaften der SAN-Copolymerisate wesentlich verschlechtert werden.

Diese Aufgabe wird erfindungsgemäß dadurch gelöst, daß den Styrol-Acrylnitril-Copolymerisaten lineare Dreiblockcopolymerisate bestimmten Aufbaus, bestimmten Molekulargewichts und in einer Menge von bis zu 2, verzugsweise höchstens 1,5 Gew.-%, bezogen auf die Gesamtmischung aus Copolymerisat und Dreiblockcopolymeres zugegeben werden.

Aus den unter (1) bis (3) zitierten Schriften konnte der Fachmann nicht entnehmen, daß die beschriebenen Antistatika geeignet sind, um die Verarbeitungsbreite für bestimmte Styrolacrylnitril-Copolymerisate im Spritzguß im Sinne einer Innenschmierung zu verbessern.

So ist aus (1) bekannt, die dort genannten Hilfsstoffe in Mengen zwischen 3 und 12 Gew.-%, bezogen auf das Polymere anzuwenden. Diese Mengen an Hilfsstoffen sind so hoch, daß vor allem die Wärmeformbeständigkeit des Grundpolymeren beeinträchtigt wird (Abfall der Wärmeformbeständigkeit). Außerdem ist deren Wasserlöslichkeit so hoch, daß sie beim Kontakt mit Wasser ausgewaschen werden können. Die Lehre von (2) geht dahin, daß mit steigendem Molekulargewicht der Äthylenoxid-/Propylenoxid-Block bzw. -Copolymeren bei einem hohen Anteil an Äthylenoxid die Verträglichkeit mit Thermoplasten zunehmen soll. Bei hohem Propylenoxidanteil im Blockcopolymeren ist jedoch gerade der umgekehrte Effekt festzustellen. Dies kann auch aus (3) abgelesen werden. Die in (3) genannten Propylenoxide sind mit unmodifizierten Styrol-Acrylnitril-Copolymerisaten in den angegebenen Konzentrationen jedoch völlig unverträglich, was an einer deutlichen Trübung zu erkennen ist.

Es war daher für den Fachmann überraschend, daß die erfindungsgemäß anzuwendenden Blockcopolymerisate eine ausreichende Verträglichkeit mit Styrol-Acrylnitril auch noch bei Molekulargewichten von bis zu 4 000 aufweisen und dabei die Wasseraufnahme der Styrolacrylnitrilcopolymerisate nicht nachteilig beeinflussen. Überraschenderweise zeigen Äthylenoxid-/Propylenoxid-Dreiblockcopolymerisate, die erfindungsgemäß angewendet werden, im Bereich von 0,3 bis 1,5 Gew.-% ihre volle Wirksamkeit bezüglich der Verarbeitungseigenschaften im Bezug auf Styrol-Acrylnitril-Copolymerisate.

Die Anwendung der erfindungsgemäßen Schmiermittel in anderen niedrigeren Konzentrationsbereichen, als sie beispielsweise von der Verwendung als Antistatika bekannt sind, haben zur Folge, daß die Mechanik der Styrol-Acrylnitrilcopolymerisate praktisch unverändert bleibt. Außerdem ist gewährleistet, daß bei den erfindungsgemäßen Formmassen die Schmiermittel nicht ausschwitzen.

Die Erfindung betrifft demgemäß Formmassen, enthaltend

A Styrol-Acrylnitril-Copolymerisate und

B Dreiblockcopolymere aus X-Y-X in Mengen bis zu 13 Gew.-%, bezogen auf A und B, die

$b_1$ einen mittelständigen, aus Propylenoxideinheiten aufgebauten Block Y enthalten, der ein mittleres Molekulargewicht (Zahlenmittel) bis zu 3 000 aufweist und die außerdem

$b_2$ an jedem der beiden Enden mindestens je einen, aus Äthylenoxideinheiten aufgebauten, Block X enthalten, und wobei der Anteil $b_2$, bezogen auf das Dreiblockcopolymerisat, weniger als 85 Gew.-% ausmacht, ggf. enthaltend

C zusätzlich übliche Zusatzstoffe dadurch gekennzeichnet, daß die Styrol-Acrylnitrilcopolymerisate A im wesentlichen bestehen aus

$a_1$ 20 bis 35 Gew.-% Acrylnitril und

$a_2$ 80 bis 65 Gew.-% Styrol und/oder α-Methylstyrol und die Komponente B in Mengen von 0,1 bis 2 Gew.-%, bezogen auf A und B, enthalten ist, wobei die Anteile $b_1$ und $b_2$, bezogen auf das Dreiblockcopolymere X-Y-X, im Bereich von

$b_1$ 80 bis 95 Gew.-% und

$b_2$ 5 bis 20 Gew.-% liegen und die mittleren Molekulargewichte derselben (Zahlenmittel)

$b_1$ oberhalb von 700 und die von der Summe der X-Blöcke

$b_2$ im Bereich von 140 bis 1 000 liegen.

Gegenüber herkömmlichen, niedermolekularen inneren Schmiermitteln, wie niedermolekularen Fettalkoholen und Mineralölen, die in geringen Mengen wirksam sind, zeigen die erfindungsgemäß anzuwendenden Blockcopolymerisate X-Y-X den Vorteil, daß sie nicht ausschwitzen und verglichen mit Hilfsstoffen, die für die antistatische Ausrüstung aus z.B. (1) bekannt sind, in geringeren Mengen anwendbar sind, so daß die mechanischen Eigenschaften des Copolymerisates A nicht nachteilig beeinflußt werden. Gegenüber den aus (1) bekannten Antistatika, besitzen die erfindungsgemäß anzuwendenden Dreiblockcopolymere eine höhere Verarbeitungsbreite (vgl. Tabelle 1). Unter der Verarbeitungsbreite ist der Druckbereich zu verstehen, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten.

Eine hohe Verarbeitungsbreite ist erwünscht, um bei Druckschwankungen oder Schwankungen der Materialeigenschaften (Inhomogenitäten) die Ausfallrate an Spritzgußformlingen möglichst niedrig halten zu können.

## Komponente A

Für die erfindungsgemäßen Formmassen werden kautschukfreie Styrol-Acrylnitril-Copolymerisate angewendet ; diese bestehen im wesentlichen aus Copolymerisaten, die 20 bis 35 Gew.-% Acrylnitril und 80 bis 65 Gew.-% Styrol enthalten. Der Styrolbestandteil kann, um die Wärmeformbeständigkeit zu verbessern ganz oder teilweise durch α-Methylstyrol ersetzt sein. Styrol-Acrylnitrilcopolymerisate sind im Handel erhältlich und können z.B. nach der Lehre der DE-AS 1 001 001 bzw. DE-PS 1 003 436 hergestellt werden. Der Molekulargewichtsbereich der Copolymerisate kann $\overline{M}_w = 10^5$ bis $\overline{M}_w = 2{,}5 \cdot 10^5$ (Gewichtsmittel $\overline{M}_w$ aus Lichtstreuung) betragen.

## Komponente B

Als Komponente B der erfindungsgemäßen Formmassen kommen lineare Dreiblockcopolymerisate in Betracht. Es werden bevorzugt lineare Dreiblockcopolymerisate X-Y-X in Mengen von 0,1 bis 2,0 Gew.-%, bevorzugt in Mengen von 0,3 bis 1,5 Gew.-%, bezogen auf die Komponenten A und B der Formmasse, angewendet. In den Grenzen von 0,3 bis 1,1 Gew.-% entfalten diese Bestandteile ihre volle Wirksamkeit in Bezug auf die Verarbeitungseigenschaften der Styrol-Acrylnitrilcopolymerisate und beeinträchtigen die Mechanik des Copolymeren praktisch nicht. Bei höheren Anteilen, beginnend ab etwa 1,5 Gew.-% nimmt die Verarbeitungsbreite ab ; bei Mengen von unter 0,1 Gew.-% nimmt ebenfalls die Verarbeitungsbreite ab. Dasselbe gilt in etwa, wenn das Molekulargewicht des mittelständigen Polypropylenblockes Werte von oberhalb 3 000 annimmt.

Die Herstellung der linearen Dreiblockcopolymerisate erfolgt in an sich bekannter Weise (N. Schönfeldt, Grenzflächenaktive Äthylenoxid-Addukte, Wissenschaftliche Verlagsgesellschaft mbH, Stuttgart, 1976, S. 53) durch Polymerisation, wobei zunächst ein mittelständiger Polypropylenoxidblock Y mit dem Molekulargewichtsbereich (Zahlenmittel des mittleren Molekulargewichts) von 700 bis 3 000, insbesondere von 900 bis 2 000 hergestellt wird, an dessen beiden Enden je ein Block aus Äthylenoxid angelagert wird. Unter dem Molekulargewicht der Blockbestandteile X und Y sollen die mittleren

Molekulargewichte [Zahlenmittel $M_n$ bestimmt z.B. aus der OH-Zahl (DIN 53240)] verstanden werden.

Es ist bevorzugt, lineare Dreiblockcopolymerisate, die aus Homopolymerisatblöcken aufgebaut sind, zu verwenden.

Der Anteil der beiden endständigen Blockcopolymerisate $b_2$ am Blockcopolymerisat beträgt 5 bis 20 Gew.-%, vorzugsweise 10 bis 15 Gew.-% und der des mittelständigen Polypropylenblocks (Y) $b_1$ 95 bis 80 Gew.-%, vorzugsweise 90 bis 85 Gew.-%.

Das Einarbeiten des Bestandteils B in die Copolymerisate A kann auf allen dem Fachmann bekannten Wegen durchgeführt werden. Insbesondere hat sich das Vermischen der Bestandteile A und B sowie die Polymerisation der Komponente A in Gegenwart der Komponente B als geeignet erwiesen.

Zusatzstoffe C

Ggf. können die erfindungsgemäßen Formmassen noch übliche Zusatzstoffe enthalten, obwohl dies nicht bevorzugt ist. Übliche Zusätze sind z.B. Farbstoffe, Stabilisatoren, organische und anorganische Pigmente sowie Füllstoffe. Die Wirkung der Verarbeitungshilfsmittel ist von diesen Zusätzen unabhängig.

Die unter C genannten Zusatzstoffe werden in den, dem Fachmann bekannten, wirksamen Mengen angewendet ; sie können zusammen mit der Komponente B in die Komponente A der Formmassen eingearbeitet werden.

Es ist noch darauf hinzuweisen, daß die erfindungsgemäß anzuwendenden Dreiblockcopolymerisate das Verarbeitungsverhalten von Styrol-Acrylnitrilcopolymerisaten verbessern, ohne den Meltindex, d.h. also die Nullviskosität wesentlich zu verändern. Es ist bekannt, daß der Zusatz von Innenschmiermitteln in allgemeinen eine Erhöhung des Meltindexes des zugrundeliegenden Polymerisates bewirkt. Dies ist überraschenderweise hier nicht der Fall ; es kann aus dem vorliegenden Versuchsmaterial geschlossen werden, daß bei den erfindungsgemäßen Formmassen bei einer Steigerung/Erhöhung des Meltindex das Verarbeitungsverhalten schlechter wird (s. z.B. Tabelle 1, Versuch 7).

Die Erfindung wird anhand der nachstehenden Beispiele und Vergleichsversuche näher erläutert. Alle in den Beispielen genannten Teile und Prozente beziehen sich, wenn nichts anderes vermerkt ist, auf das Gewicht.

Beispiel 1

Für die folgenden Versuche 1 bis 12 wurde jeweils ein Styrol-Acrylnitrilcopolymerisat, das ein mittleres Molekulargewicht von $M_w = 200\,000$ aufwies, verwendet.

Auf Zusatzstoffe, wie äußere Gleitmittel, Stabilisatoren, Pigmente etc. wurde verzichtet. Die Copolymerisate wurden in einem Extruder bei 240 °C bis 260 °C mit den in der Tabelle 1, Spalte 1, genannten Mengen an Schmiermitteln abgemischt. In der Tabelle 1 finden sich ferner Angaben über den Anteil der Äthylenoxidblöcke (EO) sowie den des mittelständigen Propylenoxidblockes (PO), bezogen auf das lineare Dreiblockcopolymerisat (Komponente B). In einer weiteren Spalte ist das mittlere Molekulargewicht ($\overline{M}_n$) für den mittelständigen Propylenoxidblock angegeben. Es folgen in weiteren Spalten die Verarbeitungstemperaturen in °C, sowie der zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen z.B. über eventuelle Schäden an den erhaltenen Spritzgußformteilen enthalten sind.

Die Versuche wurden auf einer Schneckenspritzgießmaschine Krauss-Maffei-Typ KM 265-1120 durchgeführt, wobei als Spritzling eine Kühlschrankbox mit den nachfolgend genannten technischen Daten hergestellt wurde :

— mittleres Gewicht des Spritzlings (g SAN) 150
— Abmessungen des Spritzlings (außen) Länge/Breite/Höhe mm 240/120/72
— max. Fließweg FW/mittlere Wanddicke WD mm 200/2,0
— FW/WD-Verhältnis 100 : 1
— Angußart und Abmessungen : Kegel mm 4, 6/5, 4 ⌀ Länge 22

Die Versuche wurden unter Verwendung der folgenden Maschinen-Einstelldaten durchgeführt :

— Temperaturführung im Plastifizierzylinder (°C)
wahlweise für die einzelnen Schüsse
170/180/180/180/180
200/200/200/200/200
200/220/220/220/220
200/230/230/230/230
200/240/240/240/240
200/250/250/250/250
— Temperatur Einzugszone 30 °C

4

| — Temperatur i. Werkzeug (°C) | |
| --- | --- |
| Gesenkboden | 50 |
| Gesenkmantel | 50 |
| Kern | 50 |
| Auswerferstempel | 50 |
| — Staudruck (bar) | 56 |
| — Einspritz- u. Nachdruckzeit (sec) | 10 |
| — Abkühlzeit (sec) | 14 |
| — Pausenzeit (sec) | 3 |
| — Gesamtzykluszeit (sec) | 35,5 |
| — Schneckendrehzahl (1/min) | 100 |

Die Versuchs-Ergebnisse, die in Tabelle 1 dargestellt sind, zeigen, daß das Verarbeitungsverhalten von Styrol-Acrylnitrilcopolymerisaten, die erfindungsgemäß mit dem Schmiermittel (Komponente B) ausgerüstet sind, gegenüber nicht mit solchen Mitteln ausgerüsteten Copolymerisaten eine wesentlich verbesserte Verarbeitungsbreite aufweisen. Vergleiche insbesondere die Ergebnisse der Versuche 2 bis 5 und 9 (einschließlich der Versuche 6 und 10, wobei letztere bereits verschlechterte Ausführungsformen darstellen) mit den Ergebnissen der Versuche 1, 7, 8, 11 und 12. Aus den Ergebnissen von Tabelle 1 folgt auch, daß ein zu hohes Molekulargewicht des mittelständigen Propylenoxidblockes eine Verschlechterung der Verarbeitungsbreite mit sich bringt ; siehe Versuch 11. Dasselbe ist der Fall, wenn an den Grenzen der beanspruchten Zusammensetzung das Molekulargewicht des mittelständigen Blockes hoch liegt (Versuch 10) oder bei niedrigerem Molekulargewicht der Anteil des linearen Blockcopolymerisates etwa 2 Gew.-% ausmacht (vgl. Versuch 6). Der Tabelle ist ebenfalls zu entnehmen, daß die erfindungsgemäßen Formmassen eine höhere Verarbeitungsbreite aufweisen als Formmassen, die kein Schmiermittel enthalten (Versuch 1) oder Schmiermittel im beanspruchten Molekulargewichtsbereich, die keine Äthylenoxidblöcke aufweisen (vgl. Versuch 12).

Vergleichsversuche 1-7

Die in der Tabelle 2 enthaltenen Versuchsergebnisse sollen belegen, daß die erfindungsgemäß anzuwendenden linearen Blockcopolymerisate selbst in Anteilen von bis zu 5 Gew.-%, bezogen auf das im Beispiel 1 beschriebene Styrol-Acryl-nitrilcopolymerisat, keine genügende antistatische Wirkung aufweisen.

Zur Beurteilung des antistatischen Verhaltens wurden an bei 200 °C gepreßten Rundscheiben (des Durchmessers 120 mm und der Dicke 4 mm) nach DIN 53482 der Oberflächwiderstand und in Anlehnung an DIN 53486 die elektrostatische Aufladung nach der Reibungsmethode bestimmt. Als Reibungspartner wurde Baumwolle benutzt. Die Meßwerte sind in Tabelle 2 dargestellt.

Das antistatische Verhalten wird durch die Halbwertszeit $t_h$ (in Sekunden), das ist die Zeit, in der die Hälfte der aufgebrachten Ladung abfließt und durch den Ladungsabfluß innerhalb der ersten 15 Minuten nach Beendigung des Aufladungsvorganges $\triangle E$ in [%], charakterisiert. Die Beurteilung der antistatischen Wirkung erfolgte nach den in DIN 53486 angegebenen Hinweisen. Diese Beurteilung nach der Reibungsmethode entspricht den Ergebnissen der Staubkammerprüfung. Zur Durchführung der Staubkammerprüfung wurden 24 Stunden lang im Normklima gelagerte Probekörper in einer Staubkammer gelagert, in der 10 sec lang Staub aufgewirbelt wurde. Grob anhängender Staub wurde im einem leichten Luftstrom von Probekörper abgeblasen. Die Staubfigurenbildung wurde visuell beurteilt. In den in Tabelle 2 beschriebenen Versuchen wurde das in Beispiel 1 beschriebene Styrol-Acrylnitrilcopolymerisat verwendet. In den Versuchen 2 bis 6 wurde dieses mit linearen Dreiblockcopolymeren mit endständigen Äthylenoxidblöcken die 10 Gew.-% ausmachten und bei denen das mittlere Molekulargewicht der mittelständigen Polypropylenoxidblöcke 1 200 betrug gemischt (Art. A). In Versuch 7 wurde ein Dreiblockcopolymerisat verwendet, dessen mittelständiger Polypropylenblock ein Molekulargewicht von 2 000 aufwies (Art B). Die verwendeten Mengen reichten von 1 bis zu 5 Gew.-%, bezogen auf das Styrol-Acrylnitrilcopolymerisat. Das in Versuch 1 verwendete SAN-Copolymerisat enthielt kein Schmiermittel.

Aus den Ergebnissen der Tabelle 2 ist zu entnehmen, daß die erfindungsgemäß anzuwendenden linearen Drei-Blockcopolymerisate selbst in einem Anteil von 3,4 oder 5 %, wie er aus (ì) bekannt ist, keine antistatische Wirkung ergeben. Andererseits genügen ca. 1 Gew.-% für die Verbesserung der Verarbeitungsbreite von Styrol-Acrylnitrilcopolymerisaten und zwar schon, wenn der Gesamt-Äthylenoxidanteil der Blockcopolymerisate 10 % beträgt.

Aus diesen Versuchen kann geschlossen werden, daß es nicht naheliegend war, die aus (1) bekannten Antistatika für die vorliegende Aufgabenstellung anzuwenden. Es war auch nicht zu erwarten, daß diese so abgeändert werden könnten, um in einem anderen Konzentrationsbereich bei bestimmten SAN-Copolymerisaten in der Verarbeitung beim Spritzguß eine den Fachmann überraschende Erhöhung der Verarbeitungsbreite zu ergeben.

(Siehe die Tabellen, Seiten 6 und 7)

**0 018 591**

TABELLE 1

| Versuch | Gew.-% Schmier- mittel | EO- Anteil Gew.-% | PO- Anteil Gew.-% | Molekular- gewicht $\overline{M}n$ | Verarbeitungs- temperatur °C | Optimaler Spritz- druck [bar] | Verarbeitungs- breite | Bemerkungen |
|---|---|---|---|---|---|---|---|---|
| 1 | — | — | — | — | 280 | 870 | 70 | Schieferflecken |
|   |   |   |   |   | 260 | 1 000 | 70 | Schieferbrüche |
|   |   |   |   |   | 246 | 1 100 | 70 | Angußreißer |
|   |   |   |   |   | 230 | 1 290 | 50 | Bodenreißer |
| 2 | 0,3 | 10 | 90 | 1 200 | 280 | 880 | 90 | Schieferflecken |
|   |   |   |   |   | 261 | 970 | 85 | Schieferbrüche |
|   |   |   |   |   | 244 | 1 080 | 80 |   |
|   |   |   |   |   | 230 | 1 260 | 80 |   |
| 3 | 0,5 | 10 | 90 | 1 200 | 278 | 870 | 100 | keine |
|   |   |   |   |   | 256 | 980 | 100 |   |
|   |   |   |   |   | 244 | 1 060 | 100 |   |
|   |   |   |   |   | 230 | 1 220 | 120 |   |
| 4 | 0,75 | 10 | 90 | 1 200 | 278 | 860 | 100 | keine |
|   |   |   |   |   | 256 | 970 | 100 |   |
|   |   |   |   |   | 245 | 1 050 | 100 |   |
|   |   |   |   |   | 230 | 1 230 | 100 |   |
| 5 | 1,0 | 10 | 90 | 1 200 | 278 | 840 | 130 | keine |
|   |   |   |   |   | 258 | 960 | 110 |   |
|   |   |   |   |   | 245 | 1 080 | 100 |   |
|   |   |   |   |   | 231 | 1 250 | 100 |   |
| 6 | 2,0 | 10 | 90 | 1 200 | 277 | 870 | 90 | keine |
|   |   |   |   |   | 255 | 970 | 80 |   |
|   |   |   |   |   | 240 | 1 070 | 70 |   |
|   |   |   |   |   | 227 | 1 230 | 70 |   |
| 7 | 5,0 | 10 | 90 | 1 200 | 275 | 810 | 5 | praktisch kein |
|   |   |   |   |   | 259 | 850 | 5 | Verarbeitungs- |
|   |   |   |   |   | 239 | 930 | 5 | bereich |
|   |   |   |   |   | 230 | keine Verarbeitung möglich |   |   |
| 8 | 1,0 | 30 | 70 | 1 700 | 278 | 870 | 70 | keine |
|   |   |   |   |   | 257 | 950 | 70 |   |
|   |   |   |   |   | 242 | 1 070 | 70 |   |
|   |   |   |   |   | 230 | 1 220 | 70 |   |
| 9 | 1,0 | 10 | 90 | 2 000 | 278 | 810 | 110 | keine |
|   |   |   |   |   | 257 | 930 | 110 |   |
|   |   |   |   |   | 243 | 1 030 | 110 |   |
|   |   |   |   |   | 229 | 1 200 | 110 |   |
| 10 | 1,0 | 20 | 80 | 2 500 | 277 | 830 | 70 | keine |
|   |   |   |   |   | 257 | 950 | 80 |   |
|   |   |   |   |   | 246 | 1 050 | 80 |   |
|   |   |   |   |   | 233 | 1 210 | 90 |   |
| 11 | 0,2 | 20 | 80 | 3 650 | 279 | 840 | 70 | keine |
|   |   |   |   |   | 258 | 970 | 70 |   |
|   |   |   |   |   | 246 | 1 070 | 70 |   |
|   |   |   |   |   | 233 | 1 230 | 65 |   |
| 12 | 1,0 | 0 | 100 | 2 000 | 263 | 920 | 50 | Schieferflecken |
|   |   |   |   |   | 246 | 1 080 | 40 | Schieferbrüche |
|   |   |   |   |   | 230 | 1 300 | 50 |   |

6

## TABELLE 2

| Versuch | Zusatz Art | Menge % | Antistatisches Verhalten (Reibungsmethode) th [s] | ΔE [%] | Beurteilung der antistatischen Wirkung | Staubkammer |
|---|---|---|---|---|---|---|
| 1 | — | — | > 900 | 7 | ungenügend | Staubfiguren |
| 2 | A | 1 | > 900 | 8 | " | Staubfiguren |
| 3 | A | 2 | > 900 | 13 | " | " |
| 4 | A | 3 | > 900 | 13 | " | " |
| 5 | A | 4 | 820 | 48 | " | " |
| 6 | A | 5 | 80 | 82 | gering | keine Staubfiguren |
| 7 | B | 2 | > 900 | 5 | ungenügend | Staubfiguren |

$t_H$ = Halbwertszeit

$$\Delta E = \left( \frac{E_e - E_{15}}{E_e} \right) \cdot 100$$

$E_e$ = Aufladung nach 50 Rüstungen

$E_{15}$ = Restaufladung nach 15 Minuten nach Erreichen von $E_e$.

### Ansprüche

1. Formmassen, enthaltend

A Styrol-Acrylnitril-Copolymerisate und
B Dreiblockcopolymere der Formel X-Y-X in Mengen bis zu 13 Gew.-%, bezogen auf A und B, die
$b_1$ einen mittelständigen, aus Propylenoxideinheiten aufgebauten Block Y enthalten, der ein mittleres Molekulargewicht (Zahlenmittel) bis zu 3 000 aufweist und die außerdem
$b_2$ an jedem der beiden Enden mindestens je einen, aus Äthylenoxideinheiten aufgebauten, Block X enthalten, und wobei der Anteil $b_2$, bezogen auf das Dreiblockcopolymerisat, weniger als 85 Gew.-% ausmacht, ggf. enthaltend
C zusätzlich übliche Zusatzstoffe, dadurch gekennzeichnet, daß die Styrol-Acrylnitrilcopolymerisate A bestehen aus
$a_1$ 20 bis 35 Gew.-% Acrylnitril und
$a_2$ 80 bis 65 Gew.-% Styrol und/oder α-Methylstyrol und die Komponente B in Mengen von 0,1 bis 2 Gew.-%, bezogen auf A und B, enthalten ist, wobei die Anteile $b_1$ und $b_2$, bezogen auf das Dreiblockcopolymere X-Y-X, im Bereich von
$b_1$ 80 bis 95 Gew.-% und
$b_2$ 5 bis 20 Gew.-% liegen und die mittleren Molekulargewichte (Zahlenmittel) derselben
$b_1$ oberhalb von 700 und die von der Summe der X-Blöcke
$b_2$ im Bereich von 140 bis 1 000 liegen.

2. Formmasse nach Anspruch 1, dadurch gekennzeichnet daß mindestens 0,3, höchstens jedoch 1,5 Gew.-% der Komponente B enthalten ist.

3. Formmasse nach Anspruch 1, dadurch gekennzeichnet, daß die mittleren Molekulargewichte (Zahlenmittel) der Komponenten $b_1$ und $b_2$ in den folgenden Bereichen liegen :

$b_1$ 900 bis 2 000
$b_2$ 200 bis 500.

4. Verwendung der Mischung nach Anspruch 1 für die Verarbeitung im Spritzguß.
5. Formteile aus Mischungen nach Anspruch 1.

### Claims

1. A molding material which contains

A styrene/acrylonitrile copolymers and

B up to 13 % by weight, based on A + B, of three-block copolymers X-Y-X, which copolymers contain

b$_1$ a central block Y which consists of propylene oxide units and has a number-average mean molecular weight of up to 3,000; and

b$_2$ at each of the two ends, at least one block X, consisting of ethylene oxide units, the proportion of b$_2$, based on three-block copolymer, being less than 85 % by weight, with or without

C other, conventional additives, wherein the styrene/acrylonitrile copolymers A consist of

a$_1$ from 20 to 35 % by weight of acrylonitrile units and

a$_2$ from 80 to 65 % weight of styrene units and/or α-methylstyrene units, component B is present in an amount of from 0.1 to 2 % by weight, based on the sum of A and B, and the proportions of b$_1$ and b$_2$, based on the three-block copolymer X-Y-X, are

b$_1$ from 80 to 95 % by weight and

b$_2$ from 5 to 20 % by weight,

whilst the number-average mean molecular weight of b$_1$ is greater than 700 and the number-average mean molecular weight of the sum of the X blocks b$_2$ is from 140 to 1,000.

2. A molding material as claimed in claim 1, wherein the content of component B is not less than 0.3 and not more than 1.5 % by weight.

3. A molding material as claimed in claim 1, wherein the number-average molecular weight of component b$_1$ is from 900 to 2,000 and the number-average molecular weight of complement b$_2$ is from 200 to 500.

4. Use of a mixture as claimed in claim 1 for injection molding.

5. Moldings produced from a mixture as claimed in claim 1.


**Revendications**

1. Matières à mouler, comprenant :

A des copolymérisats de styrène et d'acrylonitrile et

B des copolymères à trois blocs de la formule X-Y-X en des proportions pouvant aller jusqu'à 13 % en poids par rapport à A + B, formés de

b$_1$ un bloc central Y constitué d'unités d'oxyde de propylène et possédant un poids moléculaire moyen en nombre pouvant aller jusqu'à 3 000 et

b$_2$ au moins un bloc X constitué d'unités oxyde d'éthylène à chaque extrémité, la proportion de b$_2$ étant inférieure à 85 % en poids par rapport au copolymérisat à trois blocs, ainsi qu'éventuellement

C des additifs usuels, caractérisés en ce que les copolymérisats de styrène et d'acrylonitrile A sont composés de

a$_1$ 20 à 35 % en poids d'acrylonitrile

a$_2$ 80 à 65 % en poids de styrène et(ou) d'α-méthylstyrène et les proportions de la composante B se situent entre 0,1 et 2 % en poids par rapport à A + B, les proportions de b$_1$ et de b$_2$ par rapport au copolymère à trois blocs X-Y-X étant comprises dans les gammes de

b$_1$ 80 à 95 % en poids

b$_2$ 5 à 20 % en poids

et les poids moléculaires moyens en nombre se situant pour b$_1$ au-dessus de 700 et pour la somme des blocs X b$_2$ dans la gamme de 140 à 1 000.

2. Matière à mouler suivant la revendication 1, caractérisée en ce qu'elle contient au moins 0,3 et au plus 1,5 % en poids de la composante B.

3. Matière à mouler suivant la revendication 1, caractérisée en ce que les poids moléculaires moyens en nombre se situent dans les gammes ci-après :

composante b$_1$ de 900 à 2 000
composante b$_2$ de 200 à 500.

4. Utilisation d'une composition suivant la revendication 1 pour des moulages par injection.

5. Pièces moulées à partir de mélanges suivant la revendication 1.